# EUROPEAN PATENT APPLICATION

(11) **EP 3 670 855 A1**
(43) Date of publication of application: **24.06.2020**
(21) Application number: 18214207.5
(22) Date of filing: 19.12.2018
(51) Int. Cl.: F01N 3/20

(54) **EXHAUST GAS AFTERTREATMENT SYSTEM**

(71) Applicant: Winterthur Gas & Diesel Ltd., 8401 Winterthur (CH)
(72) Inventor: Brutsche, Martin, 8418 Schlatt (CH)
(74) Representative: Hepp Wenger Ryffel AG

(57) **Abstract**

The present invention is directed to an exhaust gas aftertreatment system (10) for a combustion engine (20) having at least one cylinder (21), preferably a large vessel engine with at least one cylinder having an inner diameter of at least 200mm, to an internal combustion engine (10) and to a method for reducing NOₓ emissions of an internal combustion engine.

The exhaust gas aftertreatment system (10) comprises a hydrolysis catalyst (1) and an SCR catalyst (2), preferably comprising Vanadium and Tungsten doted TiO₂, arranged downstream the hydrolysis catalyst (1). The total volume (Vₜ) of the hydrolysis catalyst (1) and the SCR catalyst (2) for reducing a given amount of NOₓ is smaller than the volume of a stand-alone SCR catalyst(2) for reducing the same amount of NOₓ, preferably the total volume (Vₜ) of the hydrolysis catalyst (1) and the SCR catalyst (2) is smaller than 500 1/MW, preferably 400 1/MW. Alternatively or additionally, the Vanadium content of the SCR catalyst (2) is equal or greater than 0.3%, preferably equal or greater than 0.5%, more preferably equal or greater than 0.7%. Alternatively or additionally, the hydrolysis catalyst (1) and the SCR catalyst (2) are configured for the residence time of exhaust gas in the SCR catalyst (2) being smaller than 0.5s, preferably smaller than 0.3s, preferably at an engine load of at least 90%. Alternatively or additionally, the hydrolysis catalyst (1) and the SCR catalyst (2) are arranged on the same catalyst substrate (3) .

## Description

The present invention is directed to an exhaust gas aftertreatment system for a combustion engine having at least one cylinder, preferably a large vessel engine with at least one cylinder having an inner diameter of at least 200mm, to an internal combustion engine and to a method for reducing NOₓ emissions of an internal combustion engine.

The invention relates to the technical field of combustion engines and the reduction of their emissions.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterised by the self-ignition of the fuel, but also in Otto mode, which is characterised by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM (4-stroke) and more preferably below 200 RPM (2-stroke) which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), Biological Fuels (e. g. Oil made from algae), Hydrogen, Synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing rules such as IMO Tier III.

The IMO emission standards commonly referred to as Tier I ... III standards inter alia define the NOₓ emission standards for existing and new marine engines.

For large ships the emissions requirements have been increasing, in particular with regard to the nitrogen oxide emissions. Thus, there is a need to reduce the amount of nitrogen oxides in the exhaust gas emitted by the internal combustion engines of these ships.

SCR (selective catalytic reduction) technology is used to reduce the level of nitrogen oxides (NOₓ) in an exhaust gas of a combustion engine. SCR is commonly used in land based engines, e.g. heavy duty vehicles, industrial plants and other applications. SCR technology has also been used in marine environments in combination with two-stroke diesel engines. Due to regulatory requirements for said marine diesel engines and land based engines, there is an increased need for efficient SCR systems.

SCR may be based on the reduction of nitrogen oxides in an exhaust gas with ammonia (NH₃). Typically, ammonia is generated by injecting an ammonia precursor substance, such as a urea solution, into the exhaust gas of the combustion engine. The urea solution for example is sprayed via nozzles into the hot exhaust gas, where the liquid urea solution reacts to ammonia, carbon dioxide and water vapour. The ammonia then reduces the nitrogen oxides under the influence of a catalyst in an SCR reactor to nitrogen (N₂) and water (H₂O). The generation of ammonia from liquid urea is endothermic. Thus, decomposition of the urea solution is only complete and the nitrogen oxides (NOₓ) are only reduced to nitrogen (N₂), if the exhaust gas is sufficiently hot.

EP3149298 B1 discloses an aftertreatment system, in which a hydrolysis catalytic converter is assigned to a dosing device for adding an ammonia precursor substance. By way of the hydrolysis catalytic converter, the conversion of the ammonia precursor substance into ammonia upstream of the SCR catalyst can be improved or promoted.

One problem of the known SCR reactors in combustion engines is to sufficiently reduce the NOₓ content. Therefore large volume SCR reactors are needed, in which the exhaust gas has a sufficient residence time. Large volume SCR reactors need a lot of space and are cost intensive.

Catalysts typically being used for SCR technology either comprise Vanadium, Tungsten supported by TiO₂ or are metal substituted Zeolites, like for example Cu/Zeolite or Fe/Zeolite. Vanadium promotes oxidization of NOₓ. However, the Vanadium content has to be kept low, because otherwise at high engine loads and respective high temperatures, SO₂ is oxidized to SO₃, when above a certain concentration, SO₃ creates a blue plume of sulphuric acid in and downstream of the funnel, which has to be prevented at any cost. Higher Vanadium contents may also lead to oxidation of NH₃ to NOₓ at temperatures of above 350°C. Thus, more reducing agent has to be injected. Furthermore higher Vanadium contents and especially the combination of vanadium and tungsten encourage an increased production of N₂O at temperatures of above 350°C.

It is therefore an object of the present invention to prevent the drawbacks of the prior art and to create an exhaust gas aftertreatment system, an internal combustion engine and a method for reducing NOₓ emissions of an internal combustion engine ensuring reduced operational costs, a reduced size of the aftertreatment system, a minimized emission of side-reaction products, such as N₂O and SO₃ and/or a reduced dosing of a reducing agent, such as ammonia or an ammonia precursor substance.

According to a first aspect of the invention an exhaust gas aftertreatment system is provided for a combustion engine having at least one cylinder, preferably a large vessel engine with at least one cylinder having an inner diameter of at least 200mm. The exhaust gas aftertreatment system comprises a hydrolysis catalyst and an SCR catalyst arranged downstream the hydrolysis catalyst.

The total volume of the hydrolysis catalyst and the SCR catalyst for reducing a given amount of NOₓ is smaller or equal than the volume of a stand-alone SCR catalyst for reducing the same amount of NOₓ. Preferably the total volume of the hydrolysis catalyst and the SCR catalyst is smaller than 400 l/MW.

The SCR catalyst may be arranged in a SCR reactor. The hydrolysis catalyst may be arranged in a hydrolysis catalyse reactor.

The SCR catalyst and the hydrolysis catalyst may be arranged in a common reactor.

Additionally or alternatively, the Vanadium content of the SCR catalyst is higher or equal than 0.3%, preferably higher or equal 0.5%, more preferably higher or equal 0.7%.

The percentage refers to the total weight of a catalyst coating.

Additionally or alternatively, the hydrolysis catalyst and the SCR catalyst are configured for the residence time of exhaust gas in the SCR catalyst being smaller than 0.5s, more preferably smaller than 0.3s, preferably at an engine load of at least 90% and/or an exhaust gas mass flow of 2-20kg/kWh, preferably 7-11kg/kWh.

Especially the volumes of the hydrolysis catalyst and the SCR catalyst are adapted such that the short residence time achieved at full load.

Additionally or alternatively, the hydrolysis catalyst and the SCR catalyst are arranged on the same catalyst substrate.

The SCR catalyst preferably comprises Vanadium, Tungsten and/or TiO₂, preferably Vanadium and Tungsten doted TiO₂.

The hydrolysis catalyst does not only help to hydrolyze HNCO to NH₃ but also to decompose urea molecules to HNCO and NH₃. Furthermore, at exhaust gas temperatures which are present at high loads, not only the hydrolysis takes place within the hydrolysis catalyst, but also a side reaction, similar to an SCR reaction, wherein NOₓ is significantly reduced.

Thus, all NOₓ having been already reduced in the hydrolysis catalyst will not be present in the SCR catalyst, which is arranged downstream of the hydrolysis catalyst. The SCR catalyst therefor has to reduce only a smaller amount of NOₓ.

The needed volume of the complete catalysis system, comprising the hydrolysis catalyst and the SCR catalyst, for the same NOₓ reduction is therefore less than for a stand-alone SCR catalyst. The total volume of the catalysts may be reduced by at least 8-10% as compared to a stand-alone SCR catalyst.

Within this invention the volume of the catalyst is understood as the envelope volume of the catalyst.

Since the SCR catalyst has to reduce only a smaller amount of NOₓ the volume of the SCR catalyst may be smaller when it is combined with a hydrolysis catalyst, and/or the reaction time and thus, the residence time in the SCR catalyst may be shorter.

As the exhaust gas may remain in the SCR catalyst for only a short time period, the Vanadium content of the SCR catalyst may be higher as for a bigger stand-alone SCR catalyst, because the reaction time for oxidizing SO₂ as well as the time for generating N₂O is also smaller. Furthermore, a small SCR catalyst with a high Vanadium content may provide for the same oxidation rate of NOₓ as a large SCR catalyst with a low Vanadium content.

Only a small part of the NH₃ is oxidized in the SCR catalyst and the major part of the NH₃ is used efficiently. Thus, a lower amount of NH₃ has to be provided. The risk of providing an exceeding amount of NH₃, which might be oxidized to NOₓ in the SCR catalyst or which remains as an ammonia slip, can be reduced. Overdosing of urea can be prevented.

For low engine loads and respective lower temperature, the biggest part of the "SCR reaction" and thus, the biggest part of the NOₓ reduction takes part in the SCR catalyst. However, during lower loads, the hydrolysis catalyst at least provides hydrolysis from HNCO to NH₃, such that this reaction does not have to take place in the SCR catalyst and no space has to be provided for hydrolysis in the SCR catalyst. Since the hydrolysis catalyst also helps to decompose the urea, such that nearly all of the injected urea is in the form of NH₃ at the entrance of the SCR catalyst, no extra volume has to be provided in the SCR catalyst.

Especially for lower loads an SCR catalyst comprising a high Vanadium content, namely higher that 0.3%, preferably higher or equal 0.5%, more preferably higher or equal 0.7%, has a very high activity and therefore also a small SCR catalyst may reach the same performance as a bigger SCR catalyst with a lower Vanadium content.

At higher engine load operation, the hydrolysis catalyst still provides hydrolysis of HNCO to NH₃, but provides for most of the NOₓ reduction. Only a small amount of NOₓ which is not reduced inside the hydrolysis catalyst will be reduced in the SCR catalyst.

An even more compact arrangement can be achieved, when the hydrolysis catalyst and the SCR catalyst are configured as one device, for example by being arranged on the same catalyst substrate. The exhaust gas may directly flow from the hydrolysis catalyst to the SCR catalyst.

The catalyst substrate may be metallic or ceramic. The substrate may be coated. For example the inlet of the catalysis device may be coated only with TiO₂, while the downstream part of the substrate is coated with Vanadium, Tungsten and TiO₂.

In an advantageous embodiment the exhaust gas aftertreatment system comprises a NOₓ-sensor, preferably two NOₓ-sensors.

The exhaust gas aftertreatment system in particular may comprise three NOₓ-sensors, a first one arranged upstream the hydrolysis catalyst, a second one arranged downstream the hydrolysis catalyst and upstream the SCR catalyst and a third one arranged downstream the SCR catalyst.

Preferably the NOₓ-sensor is arranged downstream the hydrolysis catalyst and/or downstream the SCR catalyst. The NOₓ-sensor may also be arranged upstream the hydrolysis catalyst.

By measuring the NOₓ content at different stages of the exhaust gas aftertreatment system, the effectivity of the respective section may be monitored.

Instead of a NOₓ-sensor a sensor may be used, which collects data allowing conclusions to be drawn about the NOₓ content.

Preferably the exhaust gas aftertreatment system comprises a control unit for comparing a measured NOₓ value or a difference of NOₓ values, measured at different stages, with a reference value. Depending on the outcome of the comparison, measures can be taken. For example the amount of the injected reducing agent, such as ammonia or ammonia precursor substance, for example urea, may be altered, or the temperature of at least a part of the exhaust gas aftertreatment system may be altered, or more or less fuel penalty has to be provided.

Alternatively, the SCR catalyst may be bypassed or only a part of the exhaust has may be guided through the SCR catalyst, when the control unit signals that a sufficient amount of NOₓ has been reduced in the hydrolysis catalyst.

Depending on applicable rules, type of fuel, power level of the engine and further factors the exhaust needs to be treated with different systems. Therefore, the exhaust may be divertible in different directions within the exhaust system of a ship engine.

In a preferable embodiment of the invention the exhaust gas aftertreatment system comprises at least one bypass separation device upstream of the hydrolysis catalyst. At least one first bypass exhaust line and at least one second bypass exhaust line are connected to the at least one bypass separation device. The at least one bypass separation device is configured to separate the exhaust gas upstream the hydrolysis catalyst into a first gas stream for the first bypass exhaust line and a second gas stream for the second bypass exhaust line. The hydrolysis catalyst and the SCR catalyst are arranged in the first bypass exhaust line downstream of the separation bypass device.

Thus, a bypass is provided, which provides branching off at least a part of the exhaust gas, such that this part does not enter the hydrolysis catalyst and the SCR catalyst.

The first bypass exhaust line and the second bypass exhaust line may get together downstream the SCR catalyst, such that the first and second gas stream merge in one line.

Preferably the exhaust gas aftertreatment system comprises a bypass adjustment device for setting the throughput of the first bypass exhaust line and the second bypass exhaust line.

The bypass adjustment device may be implemented by at least one bypass adjustment valve for opening and closing the first bypass exhaust line and/or the second bypass exhaust line. There may be one valve each for the first bypass exhaust line and the second bypass exhaust line. Hence, a desired proportion of the total exhaust gas leaving the cylinder may be guided through the first bypass exhaust line and therefore through the hydrolysis catalyst and the SCR catalyst.

The complete catalysis system, comprising the hydrolysis catalyst and the SCR catalyst, may be separated for example in Tier II mode, defining situations, in which a higher NOₓ level may be considered acceptable, such that the complete exhaust gas does not pass the hydrolysis catalyst and the SCR catalyst.

Advantageously, the exhaust gas aftertreatment system comprises a control unit for controlling the throughput of the first bypass exhaust line and the second bypass exhaust line, preferably depending on a NOₓ value, a temperature and/or an engine load.

Depending on the performance of the whole system, which may be for example determined by measuring the NOₓ value downstream the SCR catalyst or downstream the confluence of first and second gas stream, and/or depending on the needed performance more or less exhaust has may be conducted through the first bypass exhaust line and/or the second bypass exhaust line.

In a preferred embodiment of the invention the exhaust gas aftertreatment system comprises at least one conduction separation device downstream of the hydrolysis catalyst. A first conduction exhaust line and a second conduction exhaust line are connected to the at least one conduction separation device. The at least one conduction separation device is configured to separate the exhaust gas leaving the hydrolysis catalyst into a first gas stream for the first conduction exhaust line and a second gas stream for the second exhaust line. The SCR catalyst is arranged in the first conduction exhaust line downstream of the conduction separation device.

Thus, a bypass is provided, which provides branching off at least a part of the exhaust gas leaving the hydrolysis catalyst, such that this part does not enter the SCR catalyst.

The first conduction exhaust line and the second conduction exhaust line may get together downstream the SCR catalyst, such that the first and second gas stream merge in one line.

If the hydrolysis catalyst is dimensioned big enough to reduce the NOₓ completely to the Tier III level at high engine loads, the SCR catalyst is not needed. The conduction separation device downstream of the hydrolysis catalyst allows for bypassing the SCR catalyst.

Preferably, the exhaust gas aftertreatment system comprises a conduction adjustment device for setting the throughput of the first conduction exhaust line and the second exhaust line. In particular, the conduction adjustment device comprises at least one conduction adjustment valve for opening and closing the first conduction exhaust line and/or the second exhaust line. There may be one valve each for the first conduction exhaust line and the second exhaust line.

Hence, a desired proportion of the exhaust gas leaving the hydrolysis catalyst may be guided through the first conduction exhaust line and therefore through the SCR catalyst.

The conduction separation device downstream of the hydrolysis catalyst allows for using the SCR catalyst for example only at low engine loads.

Advantageously, the exhaust gas aftertreatment system comprises a control unit for controlling the throughput of the first conduction exhaust line and the second exhaust line, preferably depending on a NOₓ value, a temperature and/or an engine load.

If the NOₓ value measured downstream the SCR catalyst or downstream the confluence of first and second gas stream exceeds a given value or if the difference between a NOₓ value measured upstream the hydrolysis catalyst and a NOₓ value measured downstream the SCR catalyst or downstream the confluence of first and second gas stream falls below a predetermined value, the performance may be considered too small. In this case the control unit may trigger for opening the first conduction exhaust line and/or for enhancing the first gas stream.

The exhaust gas aftertreatment system may comprise a bypass separation device and a conduction separation device. The second bypass exhaust line may merge with the second conduction exhaust line and the first conduction exhaust line and the second bypass exhaust line may get together downstream the SCR catalyst, such that gas streams merge.

The control unit may control the throughput through the first bypass exhaust line, the second bypass exhaust line, the first conduction exhaust line and the second exhaust line.

According to a second aspect of the invention an exhaust gas aftertreatment system is provided for a combustion engine having at least one cylinder, preferably a large vessel engine with at least one cylinder having an inner diameter of at least 200mm, preferably as previously described. The exhaust gas aftertreatment system comprises a hydrolysis catalyst which hydrolysis catalyst is capable of reducing the concentration of NOₓ in the hydrolysis catalyst by at least 5%, preferably by at least 10%, more preferably by at least 20%, at a temperature of at least 420°C and/or an engine load of at least 90% and/or an exhaust gas mass flow of 2-20kg/kWh, preferably 7-11kg/kWh. The hydrolysis catalyst preferably is dimensioned such that the desired performance in NOₓ reduction is achieved.

The hydrolysis catalyst may comprise TiO₂ and/or ZrO₂ and/or Al₂O₃ and/or SiO₂ and/or H-ZSM-5.

The exhaust gas aftertreatment system may comprise a dosing unit for a reducing agent, such as ammonia or an ammonia precursor substance, for example urea. The dosing unit may also be arranged upstream of the exhaust gas aftertreatment system.

The objective of the invention is also accomplished by an internal combustion engine having at least one cylinder, preferably a large vessel engine with at least one cylinder having an inner diameter of at least 200mm, comprising an exhaust gas aftertreatment system as previously described.

The objective of the invention is also accomplished by a method for reducing NOₓ emissions of an internal combustion engine, preferably a combustion engine as previously described. The method comprises the following steps. Exhaust gas is discharged through an outlet of a cylinder. Preferably a reducing agent, such as ammonia or an ammonia precursor substance, for example urea, is dosed into the exhaust gas. Alternatively, also an ammonia water solution, urea solution, an ammonium carbonate solution, an ammonia carbamate or a urea powder may be dosed in.

The exhaust gas is guided to a hydrolysis catalyst and the concentration of NOₓ in the hydrolysis catalyst is reduced by at least by at least 5%, preferably by at least by at least 10%, more preferably by at least 20%, at a temperature of at least 420°C and/or an engine load of at least 90% and/or an exhaust gas mass flow of 2-20kg/kWh, preferably 7-11kg/kWh.

The object of the invention is also accomplished by a method for reducing NOₓ emissions of an internal combustion engine, preferably a combustion engine as previously described, preferably a method as previously described. The method comprises the following steps.

Exhaust gas is discharged through an outlet of a cylinder. Preferably substance reducing agent is dosed into the exhaust gas.

The throughput of a first bypass exhaust line and a second bypass exhaust line is controlled, preferably depending on a measured NOx value, a temperature and/or an engine load. The first bypass exhaust line and the second bypass exhaust line are connected to at least one conduction separation device arranged upstream the hydrolysis catalyst. The hydrolysis catalyst is arranged in the first bypass exhaust line and the second bypass exhaust line bypasses the hydrolysis catalyst.

In particular, a SCR catalyst is arranged downstream the hydrolysis catalyst and the SCR catalyst is arranged in the first bypass exhaust line such that the second bypass exhaust line also bypasses the SCR catalyst.

The objective of the invention is also accomplished by a method for reducing NOₓ emissions of an internal combustion engine, preferably a combustion engine as previously described, preferably a method as previously described. The method comprises the following steps:
Exhaust gas is discharged through an outlet of a cylinder. Preferably substance reducing agent is dosed into the exhaust gas.

At least a part of the exhaust gas is led to a hydrolysis catalyst.

The throughput of a first conduction exhaust line and a second conduction exhaust line is controlled, preferably depending on a measured NOx value, a temperature and/or an engine load.

The first conduction exhaust line and the second conduction exhaust line are connected to at least one conduction separation device arranged downstream the hydrolysis catalyst. An SCR catalyst is arranged in the first conduction exhaust line and the second conduction exhaust line bypasses the SCR catalyst.

The objective of the invention is also accomplished by a method for reducing NOₓ emissions of an internal combustion engine, preferably a combustion engine as previously described, preferably a method as previously described. The method comprises the following steps:
Exhaust gas is discharged through an outlet of a cylinder. Preferably substance reducing agent is dosed into the exhaust gas. The exhaust gas is led through a hydrolysis catalyst. The exhaust gas is led through a SCR catalyst arranged downstream of the hydrolysis catalyst.

An exhaust gas aftertreatment system is used, wherein the total volume of the hydrolysis catalyst and the SCR catalyst for reducing a given amount of NOₓ is smaller than the volume of a stand-alone SCR catalyst for reducing the same amount of NOₓ, preferably the total volume of the hydrolysis catalyst and the SCR catalyst is smaller than 500 l/MW, preferably 400 l/MW.

Additionally or alternatively, the Vanadium content of the SCR catalyst is equal or greater than 0.3%, preferably equal or greater than 0.5%, more preferably equal or greater than 0.7%.

Additionally or alternatively, the hydrolysis catalyst and the SCR catalyst are configured for the residence time of exhaust gas in the SCR catalyst being smaller than 0.5s, preferably smaller than 0.3s, preferably at an engine load of at least 90% and/or an exhaust gas mass flow of 2-20kg/kWh, preferably 7-11kg/kWh.

Additionally or alternatively, the hydrolysis catalyst and the SCR catalyst are arranged on the same catalyst substrate.

In a preferred embodiment of the method the NOₓ content in the exhaust gas is measured.

The NOₓ content may be measured upstream the hydrolysis catalyst and/or downstream the hydrolysis catalyst and/or downstream the SCR catalyst.

Advantageously the measured NOₓ content is compared with a reference value. The reference value may be a given value, for example a NOₓ emission value due to applicable rules.

The reference value may also be a measured value. For example the NOₓ value measured downstream the hydrolysis catalyst may be compared with the NOₓ value measured upstream the hydrolysis catalyst.

Depending on the comparison more or less gas may be guided through the hydrolysis catalyst and/or the SCR catalyst.

In the following, the invention is further explained in embodiments by means of figures:
- Figure 1:: shows a schematic view of a first example of a combustion engine;
- Figure 2:: shows a schematic view of a second example of a combustion engine;
- Figure 3:: shows a schematic view of a third example of a combustion engine.

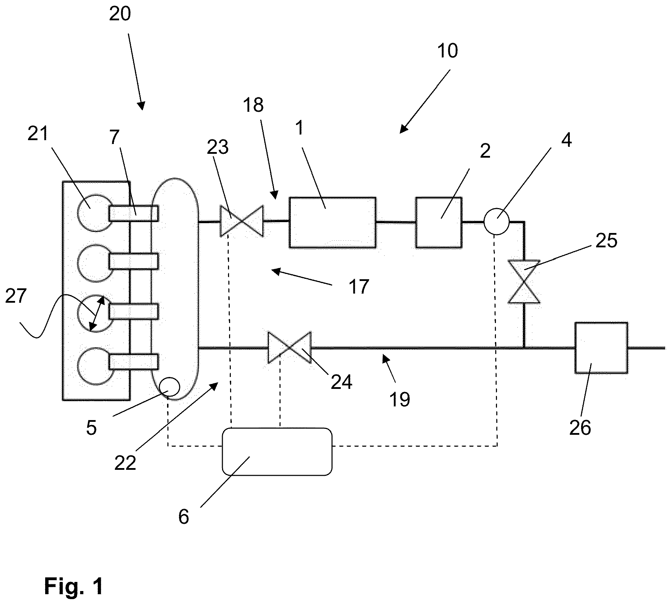

Figure 1 shows a schematic view of a first example of a combustion engine 10.

The combustion engine 20 may have four cylinders 21 and each cylinder 21 has an inner diameter 27 of at least 200mm.

Exhaust gas is discharged through an outlet 7.

The combustion engine 20 comprises an exhaust gas aftertreatment system 10 with a hydrolysis catalyst 1 and a SCR catalyst 2 arranged downstream the hydrolysis catalyst 1.

The Vanadium content of the SCR catalyst 2 may be equal or greater than 0.3%.

The exhaust gas aftertreatment system 10 comprises two NOₓ-sensors 4, 5. A first NOₓ-sensor 4 is arranged downstream the SCR catalyst 2. A second NOₓ-sensor 5 is arranged upstream the hydrolysis catalyst 1. A further NOₓ-sensor, not explicitly shown in the figure, may be arranged between the hydrolysis catalyst 1 and the SCR catalyst 2.

The exhaust gas aftertreatment system 10 comprises a control unit 6 for comparing the NOₓ value measured with the first NOₓ-sensor 4 and the NOₓ value measured with the second NOₓ-sensor 5 or with a NOₓ value measured with a further NOₓ-sensor, to check the performance of the hydrolysis catalyst 1 and the SCR catalyst 2.

The control unit 6 may also be adapted to determine the load of the engine on the basis of the speed and the fuel command.

The exhaust gas aftertreatment system 10 comprises a bypass separation device 17 upstream of the hydrolysis catalyst 1. A first bypass exhaust line 18 and a second bypass exhaust line 19 are connected to the bypass separation device 17.

The bypass separation device 17 is configured to separate the exhaust gas upstream the hydrolysis catalyst 1 into a first gas stream for the first bypass exhaust line 18 and a second gas stream for the second bypass exhaust line 19.

The first bypass exhaust line 18 and the second bypass exhaust line 19 may merge and the exhaust gas may be guided to a turbocharger 26. An additional valve 25 arranged downstream the SCR catalyst may close up the first bypass exhaust line 18 to prevent exhaust gas streaming form the second bypass exhaust line 19 in to the SCR catalyst.

The hydrolysis catalyst 1 and the SCR catalyst 2 are arranged in the first bypass exhaust line 18 downstream of the separation bypass device 17.

The exhaust gas aftertreatment system 10 comprises a bypass adjustment device 22 for setting the throughput of the first bypass exhaust line 18 and the second bypass exhaust line 19.

The bypass adjustment device 22 comprises a first bypass adjustment valve 23 for opening and closing the first bypass exhaust line 18 and a second bypass adjustment valve 24 for opening and closing the second bypass exhaust line 19.

The combustion engine 20 may comprise a temperature sensor not explicitly shown in the figures.

The control unit 6 may provide for controlling the throughput of the first bypass exhaust line 18 and the second bypass exhaust line 19, by sending a signal for opening and/or closing the first bypass adjustment valve 23 and the second bypass adjustment valve 24, depending on the NOₓ-reduction performance, a measured NOₓ value, a temperature and/or an engine load.

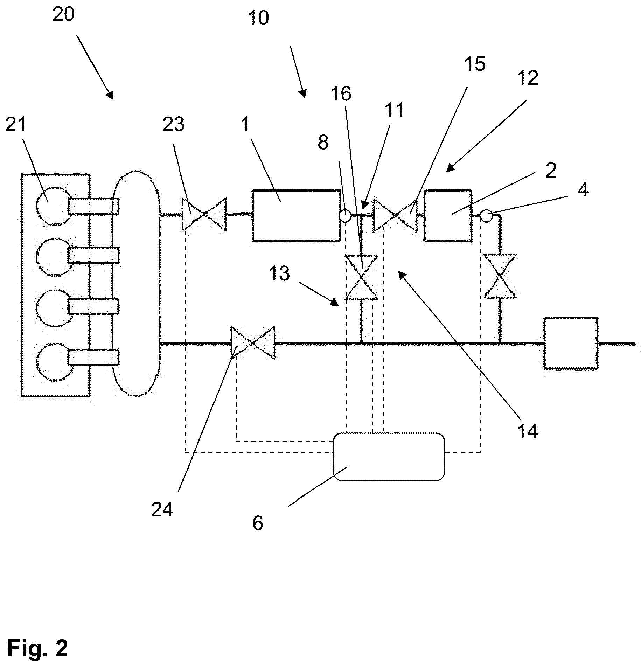

Figure 2 shows a schematic view of a second example of a combustion engine 10. The combustion engine 20 may have four cylinders 21.

The combustion engine 20 comprises an exhaust gas aftertreatment system 10 with a hydrolysis catalyst 1 and a SCR catalyst 2 arranged downstream the hydrolysis catalyst 1.

The exhaust gas aftertreatment system 10 comprises a conduction separation device 11 downstream of the hydrolysis catalyst 1, wherein a first conduction exhaust line 12 and a second conduction exhaust line 13 are connected to the at least one conduction separation device 11.

The conduction separation device 11 is configured to separate the exhaust gas leaving the hydrolysis catalyst 1 into a first gas stream for the first conduction exhaust line 12 and a second gas stream for the second conduction exhaust line 13. The SCR catalyst 2 is arranged in the first conduction exhaust line 12 downstream of the conduction separation device 11.

The exhaust gas aftertreatment system 10 comprises an adjustment device 14 for setting the throughput of the first conduction exhaust line 12 and the second conduction exhaust line 13. The adjustment device 14 comprises a first conduction adjustment valve 15 for opening and closing the first conduction exhaust line 12 and a second conduction adjustment valve 16 for opening and closing the second conduction exhaust line 13.

The exhaust gas aftertreatment system 10 may comprise two NOₓ-sensors 4, 8. A first NOₓ-sensor 4 is arranged downstream the SCR catalyst 2. A second NOₓ-sensor 8 is arranged downstream the hydrolysis catalyst 1.

A further sensor, not explicitly shown in the figure may be arranged upstream the hydrolysis catalyst 1.

The exhaust gas aftertreatment system 10 comprises a control unit 6 for controlling the throughput of the first conduction exhaust line 12 and the second conduction exhaust line 13. The control unit may send a signal for opening and closing the first conduction adjustment valve 15 and a conduction second adjustment valve 16, for example depending on the NOₓ value measured at the second NOₓ-sensor 8, which is measure for the NOₓ-reduction performance of the hydrolysis catalyst 1.

The control unit may also send a signal for opening and/or closing a first bypass adjustment valve 23 and a second bypass adjustment valve 24, such that at least a part of the exhaust gas may bypass the hydrolysis catalyst 1 and the SCR catalyst 2.

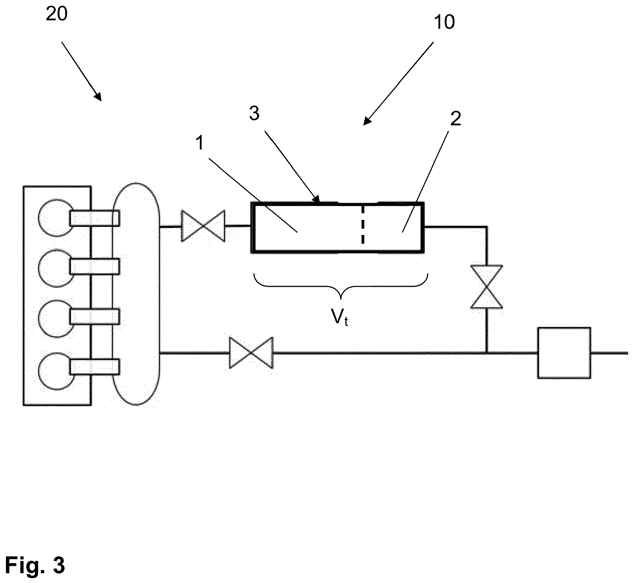

Figure 3 shows a schematic view of a third example of a combustion engine 20. The combustion engine 20 may have four cylinders 21.

The combustion engine 20 comprises an exhaust gas aftertreatment system 10 with a hydrolysis catalyst 1 and a SCR catalyst 2 arranged downstream the hydrolysis catalyst 1.

The hydrolysis catalyst 1 and the SCR catalyst 2 are arranged on the same catalyst substrate 3.

The total volume Vₜ of the hydrolysis catalyst 1 and the SCR catalyst 2 for reducing a given amount of NOₓ is equal or smaller than the volume of a stand-alone SCR catalyst for reducing the same amount of NOₓ. The total volume Vₜ of the hydrolysis catalyst 1 and the SCR catalyst 2 is equal or smaller than 500 l/MW, preferably 400 l/MW.

## Claims

1. Exhaust gas aftertreatment system (10) for a combustion engine (20) having at least one cylinder (21), preferably a large vessel engine with at least one cylinder (21) having an inner diameter (27) of at least 200mm,
comprising a hydrolysis catalyst (1) and a SCR catalyst (2), preferably comprising Vanadium and Tungsten doted TiO₂, arranged downstream the hydrolysis catalyst (1), wherein
- the total volume (Vₜ) of the hydrolysis catalyst (1) and the SCR catalyst (2) for reducing a given amount of NOₓ is smaller than the volume of a stand-alone SCR catalyst(2) for reducing the same amount of NOₓ, preferably the total volume (Vₜ) of the hydrolysis catalyst (1) and the SCR catalyst (2) is smaller than 500 l/MW, preferably 400 l/MW,
and/or
- the Vanadium content of the SCR catalyst (2) is equal or greater than 0.3%, preferably equal or greater than 0.5%, more preferably equal or greater than 0.7%,
and/or
- an hydrolysis catalyst (1) and an SCR catalyst (2) are configured for the residence time of exhaust gas in the SCR catalyst (2) being smaller than 0.5s, preferably smaller than 0.3s, preferably at an engine load of at least 90% and/or an exhaust gas mass flow of 2-20kg/kWh, preferably 7-11kg/kWh,
and/or
- the hydrolysis catalyst (1) and the SCR catalyst (2) are arranged on the same catalyst substrate (3).

2. Exhaust gas aftertreatment system (10) according to claim 1 wherein the the exhaust gas aftertreatment system (10) comprises
an NOₓ-sensor (4, 5, 8), preferably two NOₓ-sensors (4, 5, 8) .

3. Exhaust gas aftertreatment system (10) according to claim 2 wherein the exhaust gas aftertreatment system (10) comprises a control unit (6) for comparing a measured NOₓ value with a reference value.

4. Exhaust gas aftertreatment system (10) according to any of claims 1 to 3 wherein
the exhaust gas aftertreatment system (10) comprises at least one bypass separation device (17) upstream of the hydrolysis catalyst (1),
- wherein a first bypass exhaust line (18) and a second bypass exhaust line (19) are connected to the at least one bypass separation device (17),
- wherein the at least one bypass separation device (17) is configured to separate the exhaust gas upstream the hydrolysis catalyst (1) into a first gas stream for the first bypass exhaust line (18) and a second gas stream for the second bypass exhaust line (19), and
- wherein the hydrolysis catalyst (1) and the SCR catalyst (2) are arranged in the first bypass exhaust line (18) downstream of the separation bypass device (17).

5. Exhaust gas aftertreatment system (10) according to claim 4 wherein the exhaust gas aftertreatment system (10) comprises a bypass adjustment device (22) for setting the throughput of the first bypass exhaust line (18) and the second bypass exhaust line (19), preferably at least one bypass adjustment valve (23, 24) for opening and closing the first bypass exhaust line (18) and/or the second bypass exhaust line (19).

6. Exhaust gas aftertreatment system (10) according to claim 4 or 5 wherein the exhaust gas aftertreatment system (10) comprises an control unit (6) for controlling the throughput of the first bypass exhaust line (17) and the second bypass exhaust line (18), preferably depending on a NOₓ value, a temperature and/or an engine load.

7. Exhaust gas aftertreatment system (10) according to claim any of claims 1-6,
wherein the exhaust gas aftertreatment system (10) comprises at least one conduction separation device (11) downstream of the hydrolysis catalyst (1)
- wherein a first conduction exhaust line (12) and a second conduction exhaust line (13) are connected to the at least one conduction separation device (11),
- wherein the at least one conduction separation device (11) is configured to separate the exhaust gas leaving the hydrolysis catalyst (1) into a first gas stream for the first conduction exhaust line (12) and a second gas stream for the second conduction exhaust line (13), and
- wherein the SCR catalyst (2) is arranged in the first conduction exhaust line (12) downstream of the conduction separation device (11).

8. Exhaust gas aftertreatment system (10) according to claim 7 wherein the exhaust gas aftertreatment system (10) comprises an conduction adjustment device (14) for setting the throughput of the first conduction exhaust line (12) and the second conduction exhaust line (13), preferably comprising at least one conduction adjustment valve (15, 16) for opening and closing the first conduction exhaust line (12) and/or the second conduction exhaust line (13).

9. Exhaust gas aftertreatment system (10) according to claim 7 or 8 wherein the exhaust gas aftertreatment system (10) comprises a control unit(6) for controlling the throughput of the first conduction exhaust line (12) and the second conduction exhaust line (13), preferably depending on a NOₓ value, a temperature and/or an engine load.

10. Exhaust gas aftertreatment system (10) for a combustion engine (20) having at least one cylinder (21), preferably a large vessel engine with at least one cylinder (21) having an inner diameter (27) of at least 200mm, preferably according to any of claims 1-9,
comprising a hydrolysis catalyst (1) being capable of reducing the concentration of NOₓ in the hydrolysis catalyst (1) by at least 5%, preferably by at least 10%, more preferably by at least 20%, at a temperature of at least 420°C and/or an engine load of at least 90% and/or an exhaust gas mass flow of 2-20kg/kWh, preferably 7-11kg/kWh.

11. Internal combustion engine (20) having at least one cylinder (21), preferably a large vessel engine with at least one cylinder (21) having an inner diameter (27) of at least 200mm, comprising an exhaust gas aftertreatment system (10) as claimed in claims 1-10.

12. Method for reducing NOₓ emissions of an internal combustion engine, preferably a combustion engine according to claim 11, comprising the steps of:
- Discharging exhaust gas through an outlet (7) of a cylinder (21)
- Guiding exhaust gas to a hydrolysis catalyst (1) and reducing the concentration of NOₓ in the hydrolysis catalyst (1) by at least 5%, preferably by at least 10%, more preferably by at least 20%, at a temperature of at least 420°C and/or an engine load of at least 90% and/or an exhaust gas mass flow of 2-20kg/kWh, preferably 7-11kg/kWh.

13. Method for reducing NOₓ emissions of an internal combustion engine, preferably a combustion engine according to claim 11, preferably according claim 12, wherein exhaust gas is discharged through an outlet (7) of a cylinder (21) comprising the steps of:
- Controlling the throughput of a first bypass exhaust line (18) and a second bypass exhaust line (19), preferably depending on a measured NOx value, a temperature and/or an engine load, wherein the first bypass exhaust line (18) and the second bypass exhaust line (19) are connected to at least one conduction separation device (17) arranged upstream an hydrolysis catalyst (1), wherein the hydrolysis catalyst (1) is arranged in the first bypass exhaust line (18) and the second bypass exhaust line (19) bypasses the hydrolysis catalyst (1), wherein in particular a SCR catalyst (2) is arranged downstream the hydrolysis catalyst (1) and the SCR catalyst (2) is arranged in the first bypass exhaust line (18) and the second bypass exhaust line (19) bypasses the SCR catalyst (2);
and/or
- Guiding at least a part of the exhaust gas to a hydrolysis catalyst (1);
- Controlling the throughput of a first conduction exhaust line (12) and a second conduction exhaust line (12), preferably depending on a measured NOₓ value, a temperature and/or an engine load, wherein the first conduction exhaust line (12) and the second conduction exhaust line (13) are connected to at least one conduction separation device (11) arranged downstream the hydrolysis catalyst (11) and wherein an SCR catalyst (2) is arranged in the first conduction exhaust line (12) and the second conduction exhaust line (13) bypasses the SCR catalyst (2).

14. Method for reducing NOₓ emissions of an internal combustion engine, preferably a combustion engine according to claim 11, preferably according to any of claims 12 to 15, comprising the steps of:
- Discharging exhaust gas through an outlet (7) of a cylinder (21);
- Guiding exhaust gas through a hydrolysis catalyst (1);
- Guiding exhaust gas through a SCR catalyst (2) arranged downstream the hydrolysis catalyst (1),
wherein
- the total volume (Vₜ) of the hydrolysis catalyst (1) and the SCR catalyst (2) for reducing a given amount of NOₓ is smaller than the volume of a stand-alone SCR catalyst(2) for reducing the same amount of NOₓ, preferably the total volume of the hydrolysis catalyst (1) and the SCR catalyst (2) is smaller than 500 l/MW, preferably 400 l/MW,
and/or
- the Vanadium content of the SCR catalyst (2) is equal or greater than 0.3%, preferably equal or greater than 0.5%, more preferably equal or greater than 0.7%,
and/or
- the hydrolysis catalyst (1) and the SCR catalyst (2) are configured for the residence time of exhaust gas in the SCR catalyst (2) being smaller than 0.5s, preferably smaller than 0.3s, , preferably at an engine load of at least 90% and/or an exhaust gas mass flow of 2-20kg/kWh, preferably 7-11kg/kWh,
and/or
- the hydrolysis catalyst (1) and the SCR catalyst (2) are arranged on the same catalyst substrate (3).

15. Method according to claim 12-14, comprising the step of measuring the NOₓ content in the exhaust gas.

16. Method according to claim 15, comprising the step of comparing the measured NOₓ content with a reference value.
